# FASCICULE DE BREVET EUROPEEN

(11) **EP 3 123 597 B1**
(45) Date de publication et mention de la délivrance du brevet: **22.07.2020**
(21) Numéro de dépôt: 15713212.7
(22) Date de dépôt: 02.03.2015
(51) Int. Cl.: H02K 3/52

(54) **ÉLÉMENT D'INTERCONNEXION POUR LE BRANCHEMENT DES BOBINES DU STATOR**
VERBINDUNGSELEMENT ZUR VERBINDUNG VON STATORSPULEN
INTERCONNECTION ELEMENT FOR CONNECTING STATOR COILS

(30) Priorité: 24.03.2014 FR 1452427
(43) Date de publication de la demande: 01.02.2017
(73) Titulaire: Valeo Equipements Electriques Moteur, 94046 Créteil Cedex (FR)
(72) Inventeur: EL BARAKA, Khadija, 77700 Serris (FR); JUGOVIC, Svetislav, 91200 Athis-Mons (FR); ARMIROLI, Paul, 94440 Marolles En Brie (FR)
(74) Mandataire: Duprez, Richard
(86) Numéro de dépôt international: PCT/FR2015/050495
(87) Numéro de publication internationale: WO 2015/145007

(56) Documents cités:
- WO-A1-2013/154054
- WO-A2-2014/041265
- FR-A1- 2 837 993

## Description

La présente invention concerne un dispositif d'interconnexion disposé entre des bobines d'un stator et un circuit de redressement électrique de type onduleur. Elle concerne plus particulièrement un dispositif d'interconnexion associé à un stator de machine électrique polyphasée, tournante et réversible, comme par exemple un alterno-démarreur de véhicule automobile.

Dans le cadre de l'invention, le terme "polyphasé" concerne plus particulièrement des machines électriques tournantes triphasées, mais peut aussi concerner des machines électriques tournantes au nombre de phases différent. Comme il est bien connu, un alterno-démarreur comporte un rotor constituant un inducteur et un stator polyphasé portant plusieurs bobines ou enroulements qui constituent un induit et qui échangent, avec un convertisseur alternatif/continu réversible comportant des séries de transistors, une puissance électrique, ce convertisseur étant relié à une batterie rechargeable. L'alterno-démarreur peut fonctionner indifféremment, selon le mode choisi par l'électronique du véhicule, dans un mode alternateur dans lequel il permet, via le convertisseur alternatif/continu réversible, de charger la batterie du véhicule et/ou toute autre unité de stockage d'énergie par une tension continue redressée, ou de façon réversible dans un mode démarreur ou moteur, notamment pour le démarrage du véhicule ou pour l'aide au décollage, c'est à dire une suralimentation temporaire du moteur. Dans un tel agencement de connexion électrique de bobinages, on peut avoir différentes configurations de branchement électriques telles que présentées dans les documents WO2014/041265, FR2837993 ou encore WO2013/154054. Les bobines peuvent être raccordées, dans des configurations connues par ailleurs, en étoile ou en triangle, selon les valeurs de tension du moteur et du réseau à disposition.

La présente invention vise à simplifier la connectique dans un contexte de configurations de branchement multiples. Elle propose à cet effet un élément d'interconnexion pour le branchement des bobines du stator d'une machine électrique tournante polyphasée, caractérisé en ce qu'il comporte une pluralité de couches conductrices empilées axialement parmi lesquelles un même nombre de couches de base annulaires pleines, et de couches additionnelles formées chacune de plusieurs parties d'anneaux, chacune desdites partie d'anneaux ne recouvrant pas la totalité du pourtour du stator. Chacune de ces couches conductrices porte des pattes de connexion internes pour le raccordement des bobines et des pattes de connexion externes pour le raccordement à des équipements électriques connexes.

Selon une caractéristique de l'invention, le nombre de couches de base et le nombre de couches additionnelles sont chacun égaux au nombre de phases de la machine sur laquelle l'élément d'interconnexion est rapporté.

Selon une autre caractéristique de l'invention, chacune des couches additionnelles est formée de deux demi anneaux.

Les couches conductrices sont disposées axialement les unes au-dessus des autres, sans contact électrique les unes avec les autres. On pourra prévoir un isolant électrique entre chacune des couches.

Selon une caractéristique de l'invention, les pattes de connexion internes sont tournées vers l'intérieur de l'élément d'interconnexion, et les pattes de connexion externes prolongent la paroi latérale externe des couches formant l'élément d'interconnexion. Les pattes de connexion internes, plus fragiles, sont logées à l'intérieur de l'élément d'interconnexion et sont de fait protégées.

Avantageusement, chaque couche porte un nombre de pattes de connexion internes égal au nombre de bobines par phase tandis que le nombre de pattes de connexion externes est indépendant du nombre de bobines, les couches de base portant chacune une unique patte de connexion externe alors que les couches additionnelles portent chacune plusieurs pattes de connexion externes, une par partie d'anneau.

Selon différentes caractéristiques portant plus précisément sur les demi-anneaux formant les couches additionnelles :
- les pattes de connexion externes associées aux couches additionnelles sont portées par l'une des extrémités de chacune des partie d'anneau ;
- pour chaque couche additionnelle, l'ensemble des partie d'anneau de ladite couche additionnelle présentent une dimension angulaire moindre de celle des couches de base, de sorte qu'une zone de rupture est formée entre les extrémités en regard de deux partie d'anneau d'une même couche additionnelle ;
- chacune des partie d'anneau formant partie d'une couche additionnelle présente une structure identique à celle de la partie d'anneau voisine, les parties d'anneau disposées axialement l'une au-dessus de l'autre étant décalée angulairement autour de l'axe commun de la machine et de l'élément d'interconnexion pour que les pattes de connexion internes ne se chevauchent pas et soient réparties angulairement régulièrement. Le décalage angulaire avec lequel sont disposés les parties d'anneau des différentes couches additionnelles les unes par rapport aux autres est égal à 360° divisé par le nombre total de pattes de connexion internes portées par les couches de base.

Afin de faciliter le raccordement électrique des bobines sur l'élément d'interconnexion, les pattes de connexion internes des couches additionnelles sont disposées régulièrement angulairement, à proximité des pattes de connexion internes des couches de base.

Les pattes de connexion internes comportent un prolongement latéral, qui s'étend vers l'intérieur de l'élément d'interconnexion, dans le plan de la couche portant la patte de connexion, et un bord levé qui s'étend à l'extrémité libre du prolongement latéral, sensiblement perpendiculairement à celui-ci. Les bords levés des pattes de connexion internes sont tous orientés axialement dans le même sens, à savoir celui allant à l'opposé des couches de base. Par ailleurs, chaque bord levé comporte une partie ondulée formant une gorge tournée vers les couches de l'élément d'interconnexion et adaptée à recevoir les fils de raccordement des bobines.

L'invention concerne également une machine triphasée à douze bobines par phase, dans lequel un élément d'interconnexion comporte six couches, parmi lesquelles trois couches de base présentent une forme annulaire pleine et trois couches additionnelles présentent une forme annulaire partielle formée de deux demi-anneaux séparés par deux zones de rupture diamétralement opposées, chaque couche de base portant douze pattes de connexion internes pour le raccordement des bobines et chaque demi-anneau formant par paire une couche additionnelle portant six pattes de connexion interne également pour le raccordement des bobines. Les pattes de connexion internes sont agencées pour qu'une patte de connexion interne associé à une couche additionnelle soit disposée à proximité d'une patte de connexion interne associée à une couche de base, et pour que les pattes de connexion internes successives d'une même couche soient réparties angulairement avec un pas angulaire régulier de 30° dans le cas où 12 bobines par phase sont utilisées.

Plus généralement le pas angulaire régulier peut dépendre du nombre de bobine par phase NombreBobine suivant la formule : pas angulaire = 360/( NombreBobine)

Avantageusement, six bobines d'une même phase sont raccordées d'une part aux six pattes de connexion internes associées à l'un des demi-anneaux de l'une des couches additionnelles, et d'autre part à six pattes de connexion internes associées à l'une des couches de base, tandis que les six bobines restantes de la même phase sont raccordées d'une aux six pattes de connexion internes associées au demi-anneau opposé de ladite couche additionnelle, et d'autre part aux six pattes de connexion internes restantes associés à ladite couche de base.

L'invention sera maintenant plus complètement décrite en référence aux figures 1 à 5, parmi lesquelles :
- la figure 1 est un schéma électrique de montage selon un premier exemple de mise en œuvre de l'invention, d'une machine électrique tournante triphasée, d'un convertisseur électrique et d'une batterie, ladite machine et le convertisseur étant relié par un élément d'interconnexion ;
- la figure 2 est un schéma électrique de montage selon un deuxième exemple de mise en oeuvre de l'invention, dans lequel l'élément d'interconnexion relie la machine et le convertisseur, ainsi qu'une fiche de raccordement électrique ;
- la figure 3 est une représentation en perspective de l'élément d'interconnexion selon l'invention tel qu'il peut être mis en œuvre à titre d'exemple sur figures 1 et 2 ;
- la figure 4 est une vue de détail de l'élément d'interconnexion de la figure 3 ;
- la figure 5 est un schéma explicatif de quelques combinaisons de montage possibles avec l'élément d'interconnexion ;
- et la figure 6 est une vue de dessus de l'élément d'interconnexion électrique nécessaire au montage en étoile identifiée sur la figure 5.

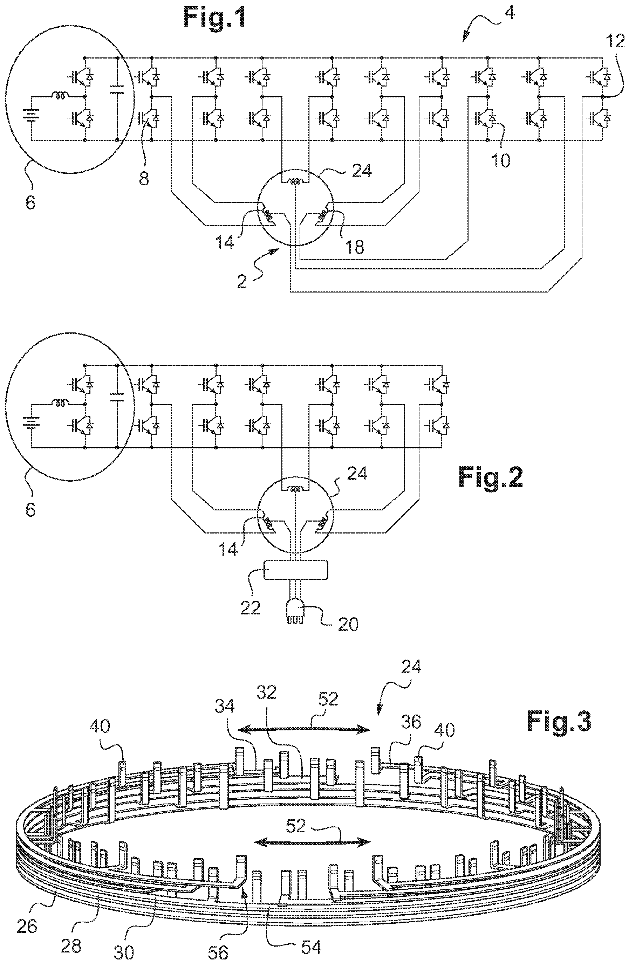

La figure 1 illustre un schéma de montage électrique selon l'invention, dans lequel une machine tournante 2 est reliée à des commutateurs de puissance d'un convertisseur de courant électrique 4, disposé entre la machine tournante et un ensemble 6 formé d'une batterie et d'un convertisseur Boost.

Dans ce qui suit, sans en limiter en quoi que ce soit la portée, on se placera ci-après dans le cadre de l'application préférée de l'invention, sauf mention contraire, c'est-à-dire dans le cas d'un convertisseur de courant électrique alternatif-continu pour un alterno-démarreur triphasé.

Le convertisseur 4 comporte des commutateurs de puissance 8 formant un pont de redresseurs semi-conducteurs. En l'occurrence, le convertisseur comprend neuf banches 10 de deux commutateurs de puissance en série formés par des transistors MOS-FET, chacune des branches étant disposée entre les pôles "-" et "+" de la batterie. Une telle structure est bien connue de l'Homme de Métier et il est inutile de la décrire plus avant. Le point milieu de chacune des branches 12 est relié à un point d'entrée/sortie du stator tandis que les extrémités des branches sont reliées aux sorties "+" et '-" de la batterie du véhicule ou de tout autre organe de stockage d'énergie électrique.

Ici, de façon plus détaillée, on peut constater qu'un enroulement 14 associé à une première phase est relié à chacune de ses extrémités au point milieu d'une première branche et d'une deuxième branche du convertisseur et qu'il en est de même pour l'enroulement associé à la deuxième phase 16, relié à chacune de ses extrémités au point milieu d'une troisième branche et d'une quatrième branche, ainsi que pour l'enroulement associé à la troisième phase 18, relié à chacune de ses extrémités au point milieu d'une cinquième branche et d'une sixième branche du convertisseur. Les trois dernières des neuf branches sont elles reliées en leur point milieu à des points d'entrée/sortie distincts des enroulements de phase.

La figure 2 illustre un schéma électrique différent en ce que le convertisseur comporte seulement six branches et en ce qu'une fiche de raccordement électrique 20 est disposée en sortie de la machine électrique tournante, via un filtre EMI 22 adapté à supprimer les interférences électromagnétiques. Un tel agencement est particulièrement intéressant en ce qu'il permet d'obtenir une connexion directe à un réseau électrique externe pour recharger les batteries.

Dans les deux cas illustrés schématiquement ci-dessus, on réalise facilement la connexion électrique des enroulements de bobinage avec les redresseurs des convertisseurs et avec les éléments de connexion électrique complémentaires, comme celui de la figure 2, par l'utilisation d'un élément d'interconnexion 24.

Selon l'invention, on dispose cet élément d'interconnexion à une extrémité frontale du stator de la machine électrique tournante pour faire le lien entre les bobines disposées à l'intérieur du stator et les équipements électriques, convertisseur ou autre, disposés à l'extérieur du stator. L'élément d'interconnexion selon l'invention est particulièrement adapté à la réalisation d'un tel câblage, pour limiter les distances de câble et permettre malgré tout une grande flexibilité pour s'adapter aux différentes configurations de raccordement possibles.

A cet effet, tel qu'illustré sur les figures 3 à 5, l'élément d'interconnexion 24 selon l'invention comporte six couches annulaires concentriques les unes par rapport aux autres et disposées successivement axialement les unes au-dessus des autres. Ces couches sont réalisées dans un matériau conducteur électriquement, comme le cuivre par exemple.

Les couches sont agencées en étant espacées axialement l'une de l'autre, d'une distance suffisante pour éviter les perturbations électromagnétiques et pour assurer une isolation électrique entre elles. On pourra prévoir de glisser une feuille d'un isolant électrique entre chacune des couches conductrices.

On distingue notamment trois couches de base et trois couches additionnelles. Une première couche de base 26 est adaptée à reposer en regard d'une extrémité frontale du stator et, dans l'axe du stator, une deuxième couche de base 28, une troisième couche de base 30, une première couche additionnelle 32, une deuxième couche additionnelle 34 et une troisième couche additionnelle 36 se succèdent axialement, la troisième couche additionnelle formant la couche la plus éloignée du stator.

Pour fixer l'élément d'interconnexion 24 comprenant des couches de base et des couches additionnelles, il est possible, par exemple de prévoir un surmoulage sur le stator. Il est également possible de prévoir des couches surmoulées l'une par rapport à l'autre, cet ensemble formant interconnecteur étant plaqué ou fixé sur le stator.

Les trois couches de base sont formées par des anneaux de métal pleins, qui créent trois traces continues 26, 28, 30, tandis que les trois couches additionnelles sont formées chacune par deux demi-anneaux, créant ainsi six demi-traces 32,32',34,34',36,36'.

Dans le cas d'une machine triphasée, c'est-à-dire comprenant trois phases, la première phase est associée à la première couche de base 26 et au deux premières couches additionnelles 32 et 32', la deuxième phase est associée à la deuxième couche de base 28 et au deux premières couches additionnelles 34 et 34' et la troisième phase est associée à la troisième couche de base 30 et au deux premières couches additionnelles 36 et 36'.

L'homme du métier saura facilement adapter ces associations dans le cas d'une machine hexaphasée, ou multiphasé, chacune des phases étant associée à une couche de base et à une couche additionnelle, ladite couche additionnelle comprenant deux demi anneaux.

L'intérêt d'utiliser des demi-anneaux pour former les couches additionnelles et des anneaux pleins pour former les couches de base sera expliqué ci-après en détaillant la connexion des bobines sur l'élément d'interconnexion.Chacune de ces couches comporte des pattes de connexion qui dépassent des couches en saillie radiale, pour d'une part le raccordement électrique du dispositif d'interconnexion aux extrémités des enroulements de bobines, et pour d'autre part le raccordement électrique du dispositif d'interconnexion au convertisseur électrique.

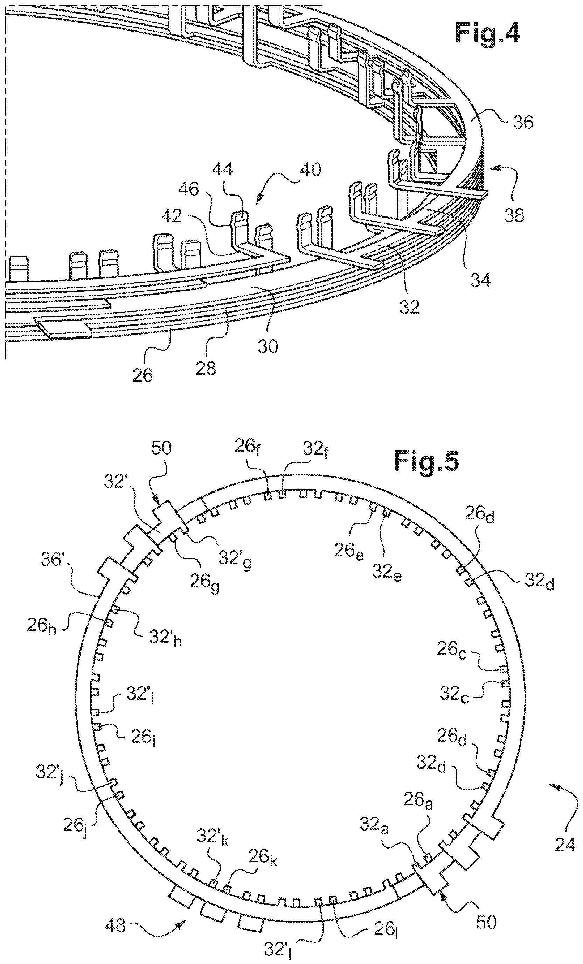

Tel que cela est plus particulièrement visible sur les figures 4 et 5, on peut distinguer deux types de pattes de connexion selon qu'elles dépassent en saillie radiale en prolongeant la paroi latérale externe 38 ou la paroi latérale interne des différentes couches.

Ainsi, les pattes de connexions internes 40 sont tournées radialement vers l'intérieur de l'élément d'interconnexion. Le nombre de pattes de connexion internes dépend du nombre de bobines disposées dans le stator. Dans l'exemple illustré, le stator comporte douze bobines par phase, de telle sorte que chacun des demi-anneaux formant une couche additionnelle comporte six pattes de connexion internes tandis que chacun des anneaux formant une couche de base comporte douze pattes de connexion internes.

Dans cet exemple, chaque couche comporte douze pattes de connexion internes, réparties annulairement avec un pas régulier de 30° entre chacune des pattes. On a donc trente six pattes de connexion internes associées aux couches de base et trente six pattes de connexion internes associées aux couches additionnelles. On dispose dans l'élément d'interconnexion les pattes de connexion interne de sorte que d'une part, les trente six pattes de connexion internes associées aux couches de base soient réparties de façon régulière, espacées donc les unes des autres de dix degrés (360°/36=10°), et que d'autre part, chacune des pattes de connexion internes portées par l'une des couches additionnelles s'étend à proximité d'une patte de connexion portée par l'une des couches de base, de manière à faciliter le raccordement des extrémités d'un même enroulement de phase.

Les pattes de connexion internes 40 présentent une forme en L avec, tel que cela est notamment visible sur la figure 4, un prolongement latéral 42 qui s'étend vers l'intérieur de l'élément d'interconnexion, dans le plan de la couche que la patte de connexion prolonge, et un bord levé 44 qui s'étend à l'extrémité libre du prolongement latéral, sensiblement perpendiculairement à ce prolongement latéral. Les bords levés des pattes de connexion internes sont tous orientés axialement dans le même sens, à savoir celui allant à l'opposé des couches de base, c'est à dire à l'opposé du stator lorsque l'élément d'interconnexion est en place. Chaque bord levé comporte une partie ondulée formant une gorge 46 tournée vers les couches de l'élément d'interconnexion et adaptée à recevoir les extrémités des enroulements de bobinage et permettre une fixation rapide de ces enroulements.

Par ailleurs, des pattes de connexion externes sont tournées radialement vers l'extérieur de l'élément d'interconnexion. Contrairement au nombre de pattes de connexion externe, on prévoit le nombre de pattes de connexion externes indépendamment du nombre de bobines disposées dans le stator. Une unique patte de connexion externe est prévue pour chacune des couches de base de l'élément d'interconnexion, tandis que deux pattes de connexion externe sont prévues pour chacune des couches additionnelles de l'élément d'interconnexion, à savoir une par demi-anneau.

Les pattes de connexion externes associées aux couches de base 48 prennent la forme de plaques planes qui s'étendent en saillie transversale des couches de base, dans le plan de ces dernières. On s'assure lors de l'assemblage des différentes couches de l'élément d'interconnexion que ces pattes de connexion externes soient disposées les unes à coté des autres.

Les pattes de connexion externes associées à une couche additionnelle 50 sont formées à une première extrémité de chacun des demi-anneaux, qui porte également, tournée vers l'intérieur de l'élément d'interconnexion, une patte de connexion interne.

Les six demi-anneaux formant les trois couches additionnelles sont identiques. Ils présentent tous les six la même longueur angulaire, leurs pattes de connexion internes sont réparties angulairement de façon identique, avec le même pas, chaque extrémité portant une des six pattes de connexion interne, et le bord levé de ces pattes de connexion internes présentent la même hauteur.

Comme cela est visible sur les figures, la longueur angulaire des demi-anneaux est légèrement inférieure à la moitié du pourtour de l'élément d'interconnexion, de sorte que lorsque les deux demi-anneaux d'une même couche sont en place, on a pour chacune des couches additionnelles deux zones de rupture 52 diamétralement opposées. Dans l'élément d'interconnexion fini, on dispose les couches additionnelles en décalage angulaire l'une par rapport à l'autre. On positionne la première extrémité 54 d'un demi-anneau de la première couche additionnelle à une position donnée, pour que la patte de connexion interne qu'elle porte s'étende à proximité d'une patte de connexion interne d'une des couches de base. On place alors le demi-anneau opposé de cette première couche additionnelle en aménageant deux zones de rupture diamétralement opposées et de même grandeur angulaire. On positionne ensuite la première extrémité d'un demi-anneau de la deuxième couche additionnelle avec un décalage angulaire par rapport à un demi-anneau de la première couche additionnelle qui est égal au décalage angulaire existant entre deux pattes de connexion successives portées indifféremment par l'une ou l'autre des couches additionnelles, ici de 10°. On positionne après le demi-anneau opposé et l'opération se reproduit pour le positionnement des demi anneaux de la troisième couche additionnelle.

De la sorte, les zones de rupture diamétralement opposées de chacune des couches se chevauchent. On obtient ainsi une disposition régulière des pattes de connexion sur tout le pourtour de l'élément d'interconnexion. Une extrémité de la troisième couche additionnelle 56 est rapprochée, au décalage angulaire près, de la première extrémité de la première couche additionnelle 54 qui avait été disposée initialement.

Lorsque l'élément d'interconnexion est en place sur le stator, on a relié les enroulements des douze bobines par phase sur chacune des pattes de connexion interne, tandis que les pattes de connexion externe servent à relier l'élément d'interconnexion au convertisseur électrique et éventuellement, comme dans le cas illustré sur la figure 2, à un composant électrique supplémentaire comme un plug-in.

La présence de demi-anneaux dans les couches additionnelles permet de câbler les douze bobines d'une phase aussi bien en série ou en parallèle par groupe de six bobines. Le convertisseur électrique auquel chacun des enroulements de phase est relié permet de commuter les branches de commutateurs de puissance pour contrôler comment les phases sont connectées.

Pour la clarté de la figure 5, on a référencé de façon distincte uniquement les pattes de connexion internes 32a, 32b, 32c, 32d, 32e, 32f, 32'g, 32'h, 32'i, 32'j, 32'k et 32'l des deux demi-traces 32 et 32' correspondantes à la première couche additionnelle, les pattes de connexion externe 48 et 50, et les pattes de connexion internes de la première couche de base 26a, 26b, 26c, 26d, 26e, 26f, 26g, 26h, 26i, 26j, 26k et 26l, en ajoutant un indice pour identifier chacune des pattes de connexion distinctes sur une même trace. C'est-à-dire que seules les traces et les pattes de connexion d'une première phase sont référencées.

Les couches de l'élément d'interconnexion sont agencées angulairement de sorte que la première couche de base est en correspondance directe avec la première couche additionnelle, la deuxième couche de base est en correspondance directe avec la deuxième couche additionnelle et la troisième couche de base est en correspondance directe avec la troisième couche additionnelle. On entend par correspondance directe le fait que les pattes de connexion interne d'une couche de base et d'une couche additionnelle soient disposées côte à côte.

Dans l'exemple illustré, on peut ainsi relier aisément la première couche de base et la première couche additionnelle puisque les pattes de connexion internes sont à proximité l'une de l'autre sur tout le pourtour de l'élément d'interconnexion. Un premier groupe de six bobines est relié à une première extrémité à la première couche additionnelle, par les pattes de connexion internes 32a à 32f portées par un demi anneau 32, et à l'autre extrémité à la première couche de base, par les pattes de connexion internes 26a à 26f. Un deuxième groupe de six bobines est relié à une première extrémité à la première couche additionnelle, par les pattes de connexion internes 32'g à 32'l portées par le demi anneau opposé 32', et à l'autre extrémité à la première couche de base, par les pattes de connexion internes 26g à 26l.

Les pattes de connexion internes 26a à 26l de la première couche sont portées par un même anneau continu 26, tandis que les pattes de connexion internes 32a, 32b, 32c, 32d, 32e, 32f, 32'g, 32'h, 32'i, 32'j, 32'k et 32'l sont portées par le demi anneau 32 et par le demi anneau opposé 32'.

La phase correspondant à la première couche de et à la première couche additionnelle comprend douze bobines : a, b, c, d, e, f, g, h, i, j, k et l. Chacune des bobines comprend deux extrémités qui sont appelées par la suite entrée et sortie.

L'entrée de la bobine a est reliée à la patte de connexion interne 26a et la sortie de la bobine a est reliée à la patte de connexion interne 32a. De même, l'entrée de la bobine b est reliée à la patte de connexion interne 26b et la sortie de la bobine b est reliée à la patte de connexion interne 32b et ainsi de suite jusqu'à la bobine f qui est reliée à la patte de connexion interne 26f et la sortie de la bobine b est reliée à la patte de connexion interne 32f.

Ainsi les bobines a-f sont branchées en parallèle l'une par rapport à l'autre entre l'anneau continu 26 et le demi anneau 32.

L'entrée de la bobine g est reliée à la patte de connexion interne 26g et la sortie de la bobine g est reliée à la patte de connexion interne 32'g. De même, l'entrée de la bobine h est reliée à la patte de connexion interne 26h et la sortie de la bobine b est reliée à la patte de connexion interne 32'h et ainsi de suite jusqu'à la bobine l qui est reliée à la patte de connexion interne 26l et la sortie de la bobine b est reliée à la patte de connexion interne 32'l.

Ainsi les bobines g-l sont branchées en parallèle l'une par rapport à l'autre entre l'anneau continu 26 et le demi anneau opposé 32'.

Les branchements qui ont été décrits pour la première phase sont également valables pour la deuxième et la troisième phase.

Ainsi, pour la deuxième phase on obtient d'une part 6 bobines en parallèle l'une par rapport à l'autre entre l'anneau continu 28 et le demi anneau 34 et d'autre part 6 bobines en parallèle l'une par rapport à l'autre entre l'anneau continu 28 et le demi anneau opposé 34', l'anneau continu 28 et les deux demi anneaux 34 et 34' correspondants à la deuxième phase.

Et pour la troisième phase, on obtient on obtient d'une part 6 bobines en parallèle l'une par rapport à l'autre entre l'anneau continu 30 et le demi anneau 36 et d'autre part 6 bobines en parallèle l'une par rapport à l'autre entre l'anneau continu 30 et le demi anneau opposé 36', l'anneau continu 30 et les deux demi anneaux 36 et 36' correspondants à la troisième phase.

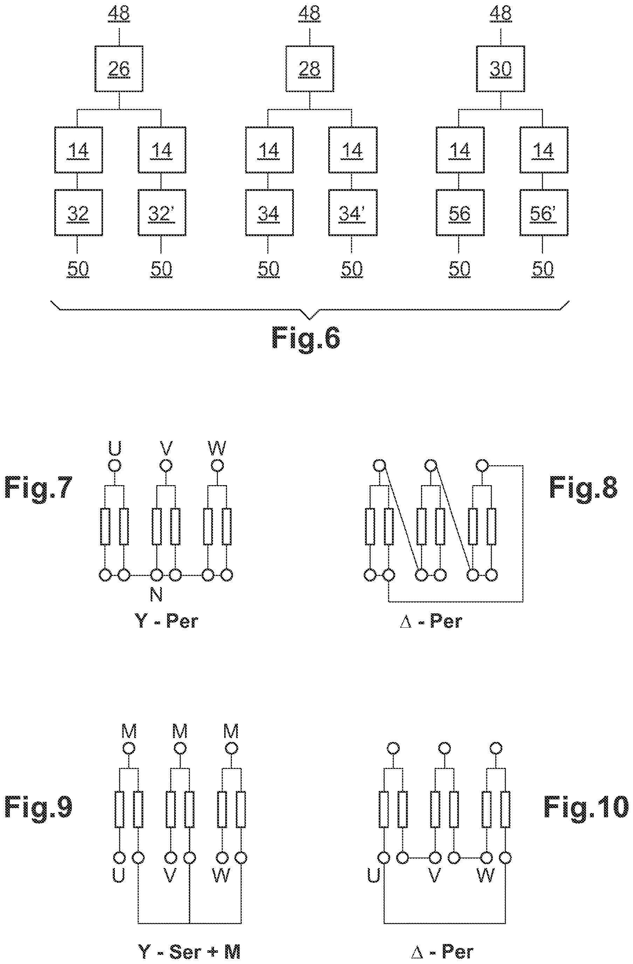

La figure 6 illustre sous forme schématique, un circuit de connexion 60 entre la couche de base et la couche additionnelle. Ce circuit de connexion 60 comprend trois phases.

Pour chacune de ces trois phases, le circuit de connexion 60 comprend une couche de base et sa patte de connexion externe 48, une couche additionnelle et ses deux pattes de connexions externes 50 et deux groupes de bobines 14. Chacun des groupes 14 représentent 6 bobines en parallèle.

Plus précisément, la première phase du circuit de connexion 60 est associée à la couche de base 26 et à la couche additionnelle 32 et est illustrée à la gauche de la figure 6. Dans la première phase du circuit de connexion 60, la patte de connexion externe 48 de la couche de base 26 est reliée via les deux groupes de bobines 14 aux deux pattes de connexion 50 appartenant respectivement aux deux demi anneaux 32 et 32' de la première couche additionnelle.

Plus précisément, la deuxième phase du circuit de connexion 60 est associée à la couche de base 28 et à la couche additionnelle 34 et est illustrée au milieu de la figure 6. Dans la deuxième phase du circuit de connexion 60, la patte de connexion externe 48 de la couche de base 28 est reliée via les deux groupes de bobines 14 aux deux pattes de connexion 50 appartenant respectivement aux deux demi anneaux 34 et 34' de la deuxième couche additionnelle.

Plus précisément, la troisième phase du circuit de connexion 60 est associée à la couche de base 30 et à la couche additionnelle 36 et est illustrée à la droite de la figure 6. Dans la première phase du circuit de connexion 60, la patte de connexion externe 48 de la couche de base 26 est reliée via les deux groupes de bobines 14 aux deux pattes de connexion 50 appartenant respectivement aux deux demi anneaux 36 et 36' de la troisième couche additionnelle. Le convertisseur électrique est branché à toutes les pattes externes 48 et 50 du circuit de connexion 60. Il est ainsi possible de contrôler les branchements entre les pattes externes de sorte que l'on peut contrôler comment les trois phases sont connectées entre elles.

Notamment, il est possible de commuter le circuit de connexion 60 suivant les 4 différentes configurations illustrées sur les figures 7 à 10.

La figure 7 illustre une première configuration du circuit de connexion 60 selon laquelle les 6 pattes de connexion externes 50 sont toute reliée en série et représentent le neutre alors que les trois pattes de connexion externe 48 représentent respectivement les points d'entrée de la première, deuxième et troisième phase. On obtient ainsi une configuration qui permet une mise en parallèle des bobines de chaque phase et un couplage en Y ou en étoile des différentes phases.

La figure 8 illustre une deuxième configuration du circuit de connexion 60 selon laquelle les deux pattes de connexion externe 50 de chaque phase sont connectées ensemble à une patte de connexion externe 48 d'une autre phase. Plus précisément, les deux pattes de connexion externe 50 de la première phase sont connectées ensemble à la patte de connexion externe 48 de la troisième ou dernière phase, les deux pattes de connexion externe 50 de la deuxième phase sont connectées ensemble à la patte de connexion externe 48 de la phase précédente ou première phase, et les deux pattes de connexion externe 50 de la troisième phase sont connectées ensemble à la patte de connexion externe 48 de la phase précédente ou deuxième phase. On obtient ainsi une configuration qui permet une mise en parallèle des bobines de chaque phase et un couplage en delta ou triangle des différentes phases, les trois pattes de connexion externe 48 représentant respectivement les points d'entrée de la première, deuxième et troisième phase.

La figure 9 illustre une troisième configuration du circuit de connexion 60 selon laquelle chacune des deux pattes de connexion externe 50 des trois phases sont reliées ensemble, les trois autres pattes de connexion externe 50 représentant respectivement les points d'entrée de la première, deuxième et troisième phase. De plus, les trois pattes de connexion externe 48 des trois phases représentent chacune un point milieu. On obtient ainsi une configuration qui permet une mise en série des groupes de 6 bobines de chaque phase et un couplage en étoile ou Y des différentes phases avec un point milieu.

La figure 9 illustre une quatrième configuration du circuit de connexion 60 selon laquelle chacune des deux pattes de connexion externe 50 des trois phases sont reliées à deux pattes de connexion externe 50 de deux autres phases. Plus précisément, l'une des pattes de connexion 50 de la première phase est reliée à la patte de connexion externe 50 de la troisième ou dernière phase, l'autre patte de connexion 50 de la première phase est reliée à la patte de connexion externe 50 de la suivante ou deuxième phase, et l'autre patte de connexion 50 de la deuxième phase est reliée à la patte de connexion externe 50 de la suivante ou troisième phase. On obtient ainsi une configuration qui permet une mise en série des groupes de 6 bobines de chaque phase et un couplage en triangle ou en delta des différentes phases.

Selon l'invention, on peut commuter entre les différentes configurations 1 à 4 illustrées sur les figures 7 à 10 sans nécessiter de brancher ou débrancher un quelconque fil mais seulement à l'aide du contrôle du convertisseur électrique. On peut notamment prévoir une évolution de ces configurations en fonction de la vitesse de rotation de la machine. Il est par exemple possible de commencer avec une configuration 3 puis de prévoir avec l'augmentation de la vitesse un passage la configuration 4 à environ 800 tours/minute puis à la configuration 1 à environ 2000 tours/minute et enfin un passage de la configuration 1 à la configuration 2 à environ 4000 tours/minute. On obtient ainsi une configuration la plus appropriée en fonction de la vitesse de rotation de la machine électrique de façon à optimiser le rendement.

A titre d'exemple, pour obtenir le montage illustré sur la figure 2, on utilise la configuration 3 et on relie les pattes de connexion externes associées aux demi anneaux des couches additionnelles avec le point milieu des branches de commutateurs de puissance, et on branche les pattes de connexion externes des couches de base sur une prise de raccordement via un dispositif EMI.

Dans cette description, le cas de couches additionnelles comportant des demi-anneaux a notamment été décrit. Bien entendu, il est également possible d'utiliser par exemple des quarts, des tiers d'anneaux ou des sixième d'anneau couvrant respectivement le quart, le tiers ou le sixième du pourtour du stator pour obtenir les mêmes avantages. Par exemple, dans le cas de quart d'anneau, chaque phase comporte une couche additionnelle qui comprend quatre anneaux. Chacun des quatre anneaux est relié au quart des bobines de la phase de la couche. Ainsi dans le cas où chaque phase comprend 12 bobines, chacun des quatre anneaux est relié à 3 bobines. Ainsi, dans ce cas, chacun des quatre anneaux comprend une patte de connexion externe 50 et 3 pattes de connexion interne.

De même, dans cette description, il est prévu notamment le cas où les couches additionnelles comprennent chacune un nombre d'anneaux identiques. Il est également possible de prévoir que les couches additionnelles dédiée chacune à une phase comprenne chacune un nombre d'anneaux différent.

Dans cette description le cas d'une machine triphasée a notamment été décrit. Bien entendu, il est également possible d'utiliser l'interconnecteur selon l'invention pour une machine multiphasée par exemple hexphasée. Dans tous les cas, il suffit que l'interconnecteur comprenne au moins une couche additionnelle et une couche de base dédiée à une phase de la machine, ladite couche additionnelle comprenant au moins deux demi-anneaux.

La description qui précède explique clairement comment l'invention permet d'atteindre les objectifs qu'elle s'est fixés. En particulier, la présence d'un élément d'interconnexion tel qu'il vient d'être décrit permet de réaliser aisément le raccordement des bobines et en combinaison avec la commande du convertisseur électrique, de choisir facilement si les bobines doivent être reliées en série ou en parallèle. Avantageusement, l'ensemble formé par l'élément d'interconnexion et le stator est particulièrement compact. L'interconnexion avec les bobines se produit radialement à l'intérieur du cylindre défini par le stator, mais axialement à l'extérieur. On peut ainsi facilement connecter les extrémités des bobines sur l'élément d'interconnexion, et les pattes de connexion internes restent protégées.

Un dispositif d'interconnexion tel qu'il vient d'être décrit trouve particulièrement application dans une machine électrique tournante polyphasée formant un alternateur pour véhicule automobile. Sans sortir du contexte de l'invention, la machine peut être réversible et former un alterno-démarreur pouvant fonctionner en mode moteur électrique pour démarrer le moteur à combustion du véhicule et en mode alternateur pour produire de l'énergie électrique.

## Revendications

1. Elément d'interconnexion (24) pour le branchement des bobines du stator d'une machine électrique tournante polyphasée (2), **caractérisé en ce qu'**il comporte une pluralité de couches conductrices empilées axialement parmi lesquelles un même nombre de couches de base (26, 28, 30), annulaires pleines, et de couches additionnelles (32, 34, 36), formées chacune de plusieurs parties d'anneaux, chacune desdites partie d'anneaux ne recouvrant pas la totalité du pourtour du stator, chacune de ces couches conductrices portant des pattes de connexion internes (40) pour le raccordement des bobines et des pattes de connexion externes (48, 50) pour le raccordement à des équipements électriques connexes (4, 20), le nombre de couches de base et le nombre de couches additionnelles étant chacun égaux au nombre de phases de la machine sur laquelle l'élément d'interconnexion est rapporté.

2. Elément d'interconnexion (24) selon la revendication 1 dans lequel les couches additionnelles (32, 34, 36), sont formées de deux demi anneaux.

3. Elément d'interconnexion selon la revendication 1 ou 2, **caractérisé en ce que** les couches (26, 28, 30, 32, 34, 36) sont disposées axialement les unes au-dessus des autres, sans contact électrique les unes avec les autres.

4. Elément d'interconnexion selon l'une des revendications 1 à 3, **caractérisé en ce que** les pattes de connexion internes (40) sont tournées vers l'intérieur de l'élément d'interconnexion, et les pattes de connexion externes (48, 50) prolongent la paroi latérale externe (38) des couches formant l'élément d'interconnexion.

5. Elément d'interconnexion selon l'une des revendications 1 à 4, **caractérisé en ce que** chaque couche conductrice (26, 28, 30, 32, 34, 36) porte un nombre de pattes de connexion internes (40) égal au nombre de bobines par phase tandis que le nombre de pattes de connexion externes (48, 50) est indépendant du nombre de bobines, les couches de base (26, 28, 30) portant chacune une unique patte de connexion externe (48) alors que les couches additionnelles portent plusieurs pattes de connexion externes (50), une par partie d'anneau.

6. Elément d'interconnexion selon l'une des revendications 1 à 5, **caractérisé en ce que** les pattes de connexion externes (50) associées aux couches additionnelles sont portées par l'une des extrémités de chacune des parties d'anneau.

7. Elément d'interconnexion selon l'une des revendications 1 à 6, **caractérisé en ce que** pour chaque couche additionnelle l'ensemble des parties d'anneau de ladite couche additionnelle présentent une dimension angulaire moindre de celle des couches de base (26, 28, 30), de sorte qu'une zone de rupture (52) est formée entre les extrémités en regard de deux parties d'anneau d'une même couche additionnelle.

8. Elément d'interconnexion selon l'une des revendications 1 à 7, **caractérisé en ce que** chacune des parties d'anneau formant partie d'une couche additionnelle (32, 34, 36) présente une structure identique à celle de la partie d'anneau voisine, les parties d'anneau disposées axialement l'une au-dessus de l'autre étant décalée angulairement autour de l'axe commun de la machine et de l'élément d'interconnexion pour que les pattes de connexion internes (40) ne se chevauchent pas et soient réparties angulairement régulièrement.

9. Elément d'interconnexion selon la revendication 8, **caractérisé en ce que** le décalage angulaire avec lequel sont disposés les parties d'anneau des différentes couches additionnelles les unes par rapport aux autres est égal à 360° divisé par le nombre total de pattes de connexion internes (40) portées par les couches de base (36, 38, 30).

10. Elément d'interconnexion selon l'une des revendications 1 à 9, **caractérisé en ce que** les pattes de connexion internes des couches additionnelles (32, 34, 36) sont disposés régulièrement angulairement, à proximité des pattes de connexion internes des couches de base (26, 28, 30).

11. Elément d'interconnexion selon l'une des revendications 1 à 10, **caractérisé en ce que** les pattes de connexion internes (40) comportent un prolongement latéral (42), qui s'étend vers l'intérieur de l'élément d'interconnexion, dans le plan de la couche portant la patte de connexion, et un bord levé (44) qui s'étend à l'extrémité libre du prolongement latéral, sensiblement perpendiculairement à celui-ci, les bords levés (44) des pattes de connexion internes étant tous orientés axialement dans le même sens, à savoir celui allant à l'opposé des couches de base.

12. Elément d'interconnexion selon la revendication 11, **caractérisé en ce que** chaque bord levé (44) comporte une partie ondulée formant une gorge (46) tournée vers les couches de l'élément d'interconnexion et adaptée à recevoir les fils de raccordement des bobines.

13. Machine triphasée à douze bobines par phase comportant un élément d'interconnexion (24) selon l'une des revendications précédentes **caractérisé en ce qu'**il comporte six couches, parmi lesquelles trois couches de base (26, 28, 30) présentent une forme annulaire pleine et trois couches additionnelles (32, 34, 36) présentent une forme annulaire partielle formée de deux demi anneaux séparés par deux zones de rupture (52) diamétralement opposées, chaque couche de base portant douze pattes de connexion internes pour le raccordement des bobines (40) et chaque demi anneau formant par paire une couche additionnelle portant six pattes de connexion interne également pour le raccordement des bobines, les pattes de connexion internes étant agencées pour qu'une patte de connexion interne associé à une couche additionnelle soit disposée à proximité d'une patte de connexion interne associée à une couche de base, et que les pattes de connexion successives d'une même couche soient réparties angulairement avec un pas angulaire régulier de 30°.

14. Machine selon la revendication précédente, **caractérisée en ce que** six bobines d'une même phase sont raccordées d'une part aux six pattes de connexion internes associées à l'un des demi anneaux de l'une des couches additionnelles, et d'autre part à six pattes de connexion internes associées à l'une des couches de base, tandis que les six bobines restantes de la même phase sont raccordées d'une aux six pattes de connexion internes associées au demi anneau opposé de ladite couche additionnelle, et d'autre part aux six pattes de connexion internes restantes associés à ladite couche de base.

## Patentansprüche

1. Verbindungselement (24) zum Anschließen der Wicklungen des Stators einer mehrphasigen drehenden elektrischen Maschine (2), **dadurch gekennzeichnet, dass** es eine Mehrzahl von axial gestapelten leitfähigen Lagen umfasst, darunter eine gleiche Anzahl von geschlossenen ringförmigen Basislagen (26, 28, 30) und von zusätzlichen Lagen (32, 34, 36), die jeweils aus mehreren Ringteilen gebildet sind, wobei jedes der Ringteile nicht den gesamten Umfang des Stators abdeckt, wobei jede dieser leitfähigen Lagen innere Verbindungszungen (40) zum Anschließen der Wicklungen und äußere Verbindungszungen (48, 50) zum Anschließen an zugehörige elektrische Ausrüstungen (4, 20) trägt, wobei die Anzahl der Basislagen und die Anzahl der zusätzlichen Lagen jeweils gleich der Anzahl der Phasen der Maschine ist, an der das Verbindungselement angebracht wird.

2. Verbindungselement (24) nach Anspruch 1, wobei die zusätzlichen Lagen (32, 34, 36) aus zwei Halbringen gebildet sind.

3. Verbindungselement nach Anspruch 1 oder 2, **dadurch gekennzeichnet, dass** die Lagen (26, 28, 30, 32, 34, 36) axial übereinander ohne elektrischen Kontakt miteinander angeordnet sind.

4. Verbindungselement nach einem der Ansprüche 1 bis 3, **dadurch gekennzeichnet, dass** die inneren Verbindungszungen (40) zum Inneren des Verbindungselements gewandt sind und die äußeren Verbindungszungen (48, 50) die seitliche Außenwand (38) der das Verbindungselement bildenden Lagen verlängern.

5. Verbindungselement nach einem der Ansprüche 1 bis 4, **dadurch gekennzeichnet, dass** jede leitfähige Lage (26, 28, 30, 32, 34, 36) eine Anzahl innerer Verbindungszungen (40) trägt, die gleich der Anzahl der Wicklungen je Phase ist, während die Anzahl äußerer Verbindungszungen (48, 50) unabhängig von der Anzahl der Wicklungen ist, wobei die Basislagen (26, 28, 30) jeweils eine einzige äußere Verbindungszunge (48) tragen, während die zusätzlichen Lagen mehrere äußere Verbindungszungen (50), eine je Ringteil, tragen.

6. Verbindungselement nach einem der Ansprüche 1 bis 5, **dadurch gekennzeichnet, dass** die zu den zusätzlichen Lagen gehörenden äußeren Verbindungszungen (50) von einem der Enden des jeder Ringteile getragen werden.

7. Verbindungselement nach einem der Ansprüche 1 bis 6, **dadurch gekennzeichnet, dass** bei jeder zusätzlichen Lage sämtliche Ringteile der zusätzlichen Lage ein geringeres Winkelmaß als die Basislagen (26, 28, 30) aufweisen, so dass ein Unterbrechungsbereich (52) zwischen den gegenüber liegenden Enden von zwei Ringteilen derselben zusätzlichen Lage gebildet wird.

8. Verbindungselement nach einem der Ansprüche 1 bis 7, **dadurch gekennzeichnet, dass** jeder der Ringteile, die einen Teil einer zusätzlichen Lage (32, 34 , 36) bilden, eine Struktur aufweist, die identisch mit der des benachbarten Ringteils ist, wobei die axial übereinander angeordneten Ringteile winklig um die gemeinsame Achse der Maschine und des Verbindungselements herum versetzt sind, damit sich die inneren Verbindungszungen (40) nicht überlappen und winklig gleichmäßig verteilt sind.

9. Verbindungselement nach Anspruch 8, **dadurch gekennzeichnet, dass** der winklige Versatz, mit dem die Ringteile der verschiedenen zusätzlichen Lagen zueinander angeordnet sind, gleich 360° dividiert durch die Gesamtzahl der von den Basislagen (36, 38, 30) getragenen inneren Verbindungszungen (40) ist.

10. Verbindungselement nach einem der Ansprüche 1 bis 9, **dadurch gekennzeichnet, dass** die inneren Verbindungszungen der zusätzlichen Lagen (32, 34, 36) in der Nähe der inneren Verbindungszungen der Basislagen (26, 28, 30) winklig gleichmäßig angeordnet sind.

11. Verbindungselement nach einem der Ansprüche 1 bis 10, **dadurch gekennzeichnet, dass** die inneren Verbindungszungen (40) eine seitliche Verlängerung (42) beinhalten, die sich zum Inneren des Verbindungselements hin in der Ebene der die Verbindungszunge tragenden Lage erstreckt, und einen aufgerichteten Rand (44), der sich am freien Ende der seitlichen Verlängerung im Wesentlichen senkrecht zu dieser erstreckt, wobei die aufgerichteten Ränder (44) der inneren Verbindungszungen alle axial in die gleiche Richtung ausgerichtet sind, und zwar entgegengesetzt zu den Basislagen.

12. Verbindungselement nach Anspruch 11, **dadurch gekennzeichnet, dass** jeder aufgerichtete Rand (44) einen gewellten Teil beinhaltet, der eine Kehle (46) bildet, die den Lagen des Verbindungselements zugewandt ist und geeignet ist, die Anschlussdrähte der Wicklungen aufzunehmen.

13. Dreiphasige Maschine mit zwölf Wicklungen je Phase, die ein Verbindungselement (24) nach einem der vorhergehenden Ansprüche beinhaltet, **dadurch gekennzeichnet, dass** es sechs Lagen beinhaltet, unter denen drei Basislagen (26, 28, 30) eine geschlossene Ringform aufweisen und drei zusätzliche Lagen (32, 34, 36) eine Teilringform aufweisen, die durch zwei Halbringe gebildet wird, die durch zwei diametral entgegengesetzte Unterbrechungsbereiche (52) getrennt sind, wobei jede Basislage zwölf innere Verbindungszungen zum Anschließen der Wicklungen (40) trägt und jeder paarweise eine zusätzliche Lage bildende Halbring sechs innere Verbindungszungen, ebenfalls zum Anschließen der Wicklungen, trägt, wobei die inneren Verbindungszungen so gestaltet sind, dass eine zu einer zusätzlichen Lage gehörende innere Verbindungszunge in der Nähe einer zu einer Basislage gehörenden inneren Verbindungszunge angeordnet ist und dass die aufeinander folgenden Verbindungszungen derselben Lage mit einem gleichmäßigen Teilungswinkel von 30° winklig verteilt sind.

14. Maschine nach dem vorhergehenden Anspruch, **dadurch gekennzeichnet, dass** sechs Wicklungen derselben Phase zum einen an die sechs inneren Verbindungszungen, die zu einem der Halbringe einer der zusätzlichen Lagen gehören, und zum anderen an sechs innere Verbindungszungen, die zu einer der Basislagen gehören, angeschlossen sind, während die sechs verbleibenden Wicklungen derselben Phase zum einen an die sechs inneren Verbindungszungen, die zu dem entgegengesetzten Halbring der zusätzlichen Lage gehören, und zum anderen an die sechs verbleibenden inneren Verbindungszungen, die zu der Basislage gehören, angeschlossen sind.

## Claims

1. Interconnection element (24) for connecting coils of the stator of a poly-phase rotating electrical machine (2), **characterized in that** it comprises a plurality of axially stacked conductive layers including a same number of solid annular base layers (26, 28, 30), and of additional layers (32, 34, 36), each formed by several ring parts, each of said ring parts not covering all of the perimeter of the stator, each of these conductive layers bearing internal connection lugs (40) for connecting the coils and external connection lugs (48, 50) for connection to connected electrical equipment (4, 20), the number of base layers and the number of additional layers each being equal to the number of phases of the machine on which the interconnection element is added.

2. Interconnection element (24) according to Claim 1, wherein the additional layers (32, 34, 36) are formed by two half-rings.

3. Interconnection element according to Claim 1 or 2, **characterized in that** the layers (26, 28, 30, 32, 34, 36) are disposed axially on top of one another, without electrical contact with one another.

4. Interconnection element according to one of Claims 1 to 3, **characterized in that** the internal connection lugs (40) are turned towards the interior of the interconnection element, and the external connection lugs (48, 50) extend the outer lateral wall (38) of the layers forming the interconnection element.

5. Interconnection element according to one of Claims 1 to 4, **characterized in that** each conductive layer (26, 28, 30, 32, 34, 36) bears a number of internal connection lugs (40) equal to the number of coils per phase whereas the number of external connection lugs (48, 50) is independent of the number of coils, the base layers (26, 28, 30) each bearing a single external connection lug (48) while the additional layers bear several external connection lugs (50), one for each ring part.

6. Interconnection element according to one of Claims 1 to 5, **characterized in that** the external connection lugs (50) associated with the additional layers are borne by one of the ends of each of the ring parts.

7. Interconnection element according to one of Claims 1 to 6, **characterized in that**, for each additional layer, all of the ring parts of said additional layer have a smaller angular dimension than that of the base layers (26, 28, 30), such that a break zone (52) is formed between the facing ends of two ring parts of one and the same additional layer.

8. Interconnection element according to one of Claims 1 to 7, **characterized in that** each of the ring parts forming part of an additional layer (32, 34, 36) has a structure identical to that of the neighbouring ring part, the ring parts disposed axially one on top of the other being offset angularly about the common axis of the machine and of the interconnection element so that the internal connection lugs (40) do not overlap and are regularly distributed angularly.

9. Interconnection element according to Claim 8, **characterized in that** the angular offset with which the ring parts of different additional layers are disposed relative to one another is equal to 360° divided by the total number of internal connection lugs (40) borne by the base layers (36, 38, 30).

10. Interconnection element according to one of Claims 1 to 9, **characterized in that** the internal connection lugs of the additional layers (32, 34, 36) are regularly disposed angularly, in proximity to the internal connection lugs of the base layers (26, 28, 30) .

11. Interconnection element according to one of Claims 1 to 10, **characterized in that** the internal connection lugs (40) comprise a lateral extension (42), which extends towards the interior of the interconnection element, in the plane of the layer bearing the connection lug, and a raised edge (44) which extends at the free end of the lateral extension, substantially at right angles thereto, the raised edges (44) of the internal connection lugs being all oriented axially in the same direction, namely that going opposite the base layers.

12. Interconnection element according to Claim 11, **characterized in that** each raised edge (44) comprises a corrugated part forming a groove (46) turned towards the layers of the interconnection element and adapted to receive the coil connection wires.

13. Three-phase machine with twelve coils per phase comprising an interconnection element (24) according to one of the preceding claims, **characterized in that** it comprises six layers, of which three base layers (26, 28, 30) have a solid annular form and three additional layers (32, 34, 36) have a partial annular form formed by two half-rings separated by two diametrically opposing break zones (52), each base layer bearing twelve internal connection lugs for connecting the coils (40) and each half-ring forming, in pairs, an additional layer bearing six internal connection lugs also for connecting the coils, the internal connection lugs being arranged so that an internal connection lug associated with an additional layer is disposed in proximity to an internal connection lug associated with a base layer, and the successive connection lugs of one and the same layer are distributed angularly with a regular angular pitch of 30°.

14. Machine according to the preceding claim, **characterized in that** six coils of one and the same phase are connected on the one hand to six internal connection lugs associated with one of the half-rings of one of the additional layers, and on the other hand to six internal connection lugs associated with one of the base layers, while the six remaining coils of the same phase are connected on the one hand to the six internal connection lugs associated with the half-ring opposite said additional layer, and on the other hand to the six remaining internal connection lugs associated with said base layer.
